Europäisches Patentamt

European Patent Office

Office européen des brevets

(19)

(11) Veröffentlichungsnummer: **0 128 575**
A2

(12) **EUROPÄISCHE PATENTANMELDUNG**

(21) Anmeldenummer: **84106664.0**

(22) Anmeldetag: **12.06.84**

(51) Int. Cl.³: **B 65 D 59/06, B 65 D 59/02**

(30) Priorität: **13.06.83 DE 3321273**

(43) Veröffentlichungstag der Anmeldung: **19.12.84 Patentblatt 84/51**

(84) Benannte Vertragsstaaten: **AT CH DE FR GB IT LI**

(71) Anmelder: **EMAG MASCHINENFABRIK GMBH, Austrasse 24, D-7335 Salach/Württemberg (DE)**

(72) Erfinder: **Pötsch, Franz, Friesenstrasse 4, D-7336 Uhingen (DE)**
Erfinder: **Rees, Manfred, Freiligrathstrasse 9, D-7320 Göppingen (DE)**

(74) Vertreter: **Zmyj, Erwin, Dipl.-Ing., Postfach 95 04 28, D-8000 München 95 (DE)**

(54) Schutzvorrichtung für das Ende eines mit Innen- oder Aussengewinde versehenen Rohres und Verfahren zur Herstellung einer Schutzvorrichtung.

(57) Die Schutzvorrichtung für Gewinde, welche am Ende eines Rohres vorgesehen sind, ist im wesentlichen als Hülse oder Kappe 10 ausgebildet, die im Falle des Schutzes von Aussengewinde an nach innen vorspringenden Teilflächen Gewindeabschnitte 16 aufweist, die mit dem zu schützenden Gewinde verschraubbar sind. Im Falle, dass Innengewinde zu schützen sind, ist die Schutzhülse 19 mit nach aussen gerichteten Vorsprüngen 22 versehen, auf denen Gewindeabschnitte 23 ausgebildet sind. Die auf Teilflächen der Schutzvorrichtung ausgebildeten Gewindeabschnitte sind durch Prägen oder Schlagen erzeugt, wobei das Material der Schutzhülse gegen ein Werkzeug verformt wird, das ein dem zu schützenden Rohrende entsprechendes Gewinde aufweist. Durch die bleibende Verformung des Mantels der Schutzhülse oder der Schutzkappe wird auf vorspringenden Teilflächen das Gewinde am Werkzeug abgeformt.

Schutzvorrichtung für das Ende eines
mit Innen- oder Außengewinde versehenen
Rohres und Verfahren zur Herstellung
einer Schutzvorrichtung

Die Erfindung bezieht sich auf eine Schutzvorrichtung für
das Ende eines mit Innen- oder Außengewinde versehenen
Rohres, insbesondere für Ölfeld-Rohre,
nach Art eines aus Metall bestehenden Hohlkörpers
mit Außengewinde oder Innengewinde, der mit dem zu
schützenden Rohr verschraubbar ist. Die Erfindung bezieht
sich auch auf ein Verfahren zur Herstellung einer Schutzvorrichtung.

Schutzvorrichtungen für die mit Gewinde versehenen Rohrenden sind in vielen Ausführungsformen bekannt (DE-AS
28 54 802, US-PS 4 139 023 und GB-PS 15 80 341). Die bekannten Schutzvorrichtungen bestehen üblicherweise aus
Kunststoff oder aus einem metallischen Hohlkörper, der
mit einer Kunststoffverkleidung versehen ist, die ein
Gewinde aufweist, welches mit dem zu schützenden Gewinde
in Eingriff kommt.

Für Rohre großen Durchmessers, wie sie bei Pipeline-
Rohren vorhanden sind, können jedoch Kunststoffschutzvorrichtungen nicht verwendet werden, weil die mechanische
Festigkeit solcher Schutzvorrichtungen nicht ausreicht,
da die zu schützenden Rohre aufgrund Ihres großen Durchmessers und der notwendigen großen Wandstärke ein erhebliches Gewicht aufweisen. Dieses Gewicht reicht bereits
aus, daß ohne Stoßbelastungen nur aufgrund des Gewichtes
Kunststoffkappen als Schutzvorrichtungen den auftretenden Belastungen nicht standhalten könnten. Es kommen also
nur massive, aus Metall bestehende Schutzvorrichtungen in
Frage, die jedoch einen sehr großen Aufwand erfordern, der
insbesondere auf das Schneiden oder Rollen des Gewindes
an der Schutzvorrichtung zurückzuführen ist. Berücksichtigt
man die Tatsache, daß diese Schutzvorrichtungen in Form
von Schutzkappen nach ihrer Entfernung weggeworfen werden,
weil ein Rücktransport aus wirtschaftlichen Gründen nicht
in Frage kommt, so ist ersichtlich, daß es wünschenswert
erscheint, den Bearbeitungsaufwand für solche Schutzvorrichtungen möglichst gering zu halten.

Aufgabe der Erfindung ist es deshalb eine möglichst einfache und daher billige Schutzvorrichtung für Rohre
großen Durchmessers zu schaffen.

Diese Aufgabe wird ausgehend von einer Schutzvorrichtung
nach dem Oberbegriff des Anspruchs 1 erfindungsgemäß dadurch gelöst, daß das Gewinde der Schutzvorrichtung in
Form von Gewindeabschnitten auf Teilflächen der Mantelfläche des Hohlkörpers ausgebildet ist, wobei die Teilflächen gegenüber der Mantelfläche hervorstehen und
daß der Durchmesser des gewindefreien Mantels des Hohlkörpers mit geringem Spiel über den zu schützenden Gewindeabschnitt schiebbar ist.

Durch diese Ausgestaltung ist eine Schutzvorrichtung geschaffen, bei der der aus Metall bestehende Hohlkörper
im Bereich seiner gewindefreien Zone mit geringem Spiel über das zu schützende Gewinde greift und im Bereich bestimmter Teilflächen, die hervorstehen, Gewindeabschnitte aufweist, die ein Verschrauben mit dem zu schützenden Gewinde ermöglichen. Die Ausbildung von kurzen Gewindeabschnitten verbilligt die Herstellung dieser Schutzvorrichtungen erheblich, da das Gewindeschneiden eines durchgehenden Gewindes wesentlich aufwendiger ist, als die Anfertigung eines Gewindeabschnittes auf einer Teilfläche des Hohlkörpers. Die notwendigen hervorstehenden Teilflächen können gemäß einer weiteren vorteilhaften Ausgestaltung der Erfindung durch Prägen erzeugt sein.

Es ist ebenfalls außerordentlich vorteilhaft, wenn die Gewindeabschnitte durch prägende Verformung erzeugt werden.

Die Teilflächen können punktförmig, d. h. im wesentlichen die Form einer Kreisfläche oder einer elliptischen Fläche aufweistn. Es ist auch möglich die Teilflächen in Form von Streifen auszubilden, die in Richtung der Längsachse des Hohlkörpers verlaufen. Letztere Ausbildung hat den Vorteil, daß wesentlich mehr Gewindeabschnitte vorhanden sind, wodurch die Flächenpressung pro Gewindeabschnitt geringer wird, was zur Folge hat, daß die Schutzwirkung besser wird, da Stöße auf den Hohlkörper bei einer größeren Anzahl von Gewindeabschnitten eine geringe Belastung des einzelnen Gewindeganges wegen der geringeren Flächenpressung zur Folge haben.

Um bei sehr starken Stößen auf die auf das Rohrende aufgeschraubte Schutzvorrichtung eine Beschädigung des Gewindes trotz dieser Schutzvorrichtung zu vermeiden, weist diese gemäß einer weiteren vorteilhaften Ausgestaltung der Erfindung eine Schulter auf, mit der sich der Hohlkörper im aufgeschraubten Zustand am Rohrende des zu schützenden Rohres abstützt.

Diese Abstützwirkung wird dadurch verbessert, daß die Schulter Anlagenflächen zur Anlage an einer Innenphase und gegebenenfalls auch noch an der Stirnfläche des Rohres aufweist. Hierdurch wird der schützende Hohlkörper nicht nur zentriert sondern auch an einer Stelle abgestützt, wo das Rohr größere Stöße aufnehmen kann ohne daß eine Beschädigung eintreten könnte.

Bei Rohren mit Außengewinde kann die Schutzvorrichtung als Kappe ausgebildet sein, d. h. der Hohlkörper weist einen Boden an einem Ende auf, so daß dieser Hohlkörper hierdurch noch mehr versteift wird.

Es ist außerdem Aufgabe der Erfindung ein Verfahren anzugeben, mit dessen Hilfe die Schutzvorrichtung in einfacher Weise herstellbar ist.

Diese Aufgabe wird ausgehend von einem Verfahren gemäß Oberbegriff des Anspruchs 9 erfindungsgemäß dadurch gelöst, daß ein Hohlkörper durch Druck- oder Schlagkräfte gegen ein dem zu schützenden Gewindeabschnitt entsprechendes Werkzeug im Bereich einiger Teilflächen gedrückt und dabei unter Abformung des Gewindes des Werkzeuges an diesen Teilflächen bleibend verformt wird.

Das erfindungsgemäße Verfahren besteht also darin, daß der Hohlkörper beispielsweise durch Schlageinwirkung an bevorzugten Stellen verformt wird, wobei dieser verformte Teilbereich sich an das Gewinde des Werkzeuges anlegt, wobei die Krafteinwirkung selbstverständlich so groß sein muß, daß sich nicht nur der Mantel des

0128575

Hohlkörpers verformt, sondern auch der Werkstoff des Mantels im Bereich dieser verformten Teilflächen in die Gewindegänge des Werkzeuges eindringt, wodurch dieser Gewindegang abgeformt wird und dadurch an den verformten Teilflächen des Hohlkörpers durch bleibende Verformung des Hohlkörpers in diesen Teilbereichen entsteht. Bei einem Hohlkörper mit Innengewinde wird dieser auf einen Gewindedorn als Werkzeug aufgeschoben und durch Pressen oder Schlagen an bestimmten Teilbereichen auf den Dorn gepreßt, wodurch das Gewinde des Dornes an der Innenseite des Hohlkörpers abgeformt wird. Bei einer Schutzvorrichtung die Außengewinde aufweisen muß, weil sie ein Rohr mit Innengewinde schützen soll, wird dieser Hohlkörper in ein Werkzeug eingeschoben, welches Innengewinde hat. Nach diesem Einschieben wird der Hohlkörper von innen an bevorzugten Teilflächen gegen das Werkzeug gedrückt, so daß sich an seiner Außenseite das Innengewinde des Werkstückes abformt.

Bei den geschilderten Verformungsvorgängen werden also nicht nur die notwendigen hervorstehenden Teilflächen sondern gleichzeitig auch die Gewindeabschnitte erzeugt.

Die Erfindung ist in der Zeichnung beispielsweise dargestellt. In dieser zeigen:

Fig. 1    einen Längsschnitt durch ein Rohrende und eine
          aufgeschraubte Schutzvorrichtung für ein Außengewinde am Rohrende;

Fig. 2    einen Schnitt nach der Linie II-II in Fig. 1;

Fig. 3    einen der Fig. 1 entsprechenden Längsschnitt
          durch eine abgeänderte Ausführungsform;

0128575

Fig. 4    einen Schnitt nach der Linie IV-IV in Fig. 4;

Fig. 5    einen Schnitt durch eine Schutzvorrichtung für
          ein Innengewinde am Rohrende; und

Fig. 6    einen Schnitt nach der Linie VI-VI in Fig. 5.

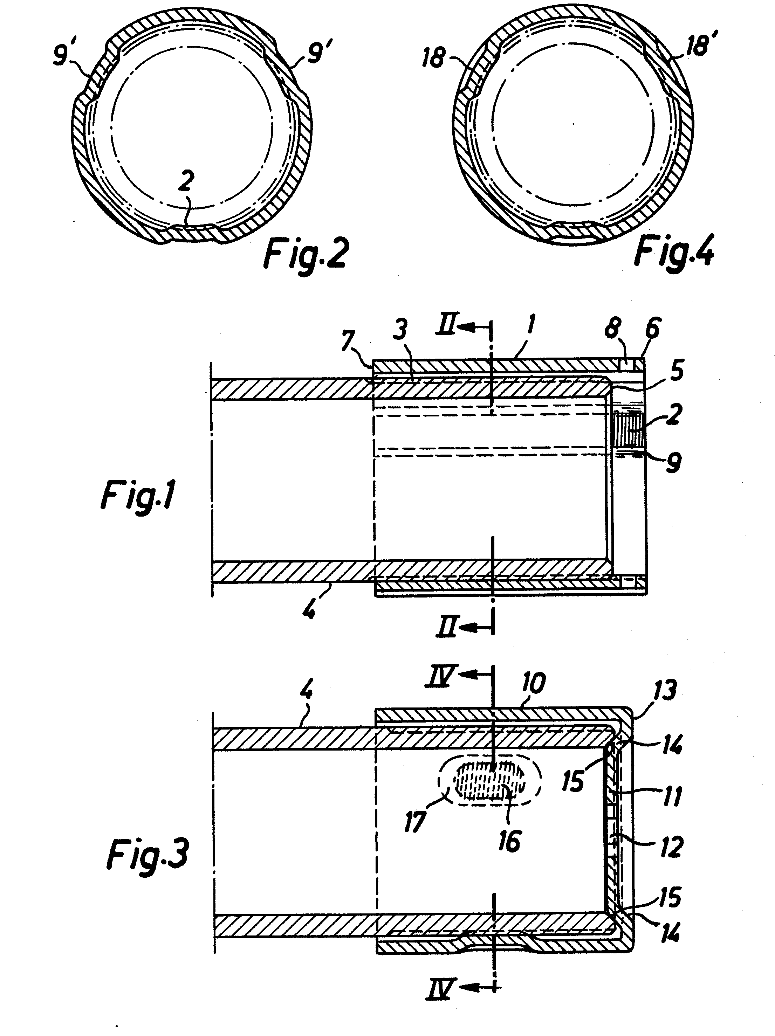

Die in den Fig. 1 und 2 dargestellte Schutzvorrichtung
für Außengewinde am Ende eines Rohres ist als Metallhülse 1 mit verhältnismäßig großer Wandstärke ausgebildet und mittels Gewindeabschnitten 2 auf ein zu
schützendes Außengewinde 3 eines Rohrendes 4 aufgeschraubt. Die Hülse 1 steht zum Schutz des vorderen
Endes 5 des Rohrendes 4 über dieses im aufgeschraubten
Zustand mit ihrem einen Ende 6 hinaus, während das
gegenüberliegende Ende 7 am Ende des Außengewindes 3
am gewindefreien Teil des Rohrendes 4 abgestützt ist.
Mit 8 sind Bohrungen zum Einsetzen eines Werkzeuges
bezeichnet, um die Hülse 1 aufschrauben zu können.

Die Gewindeabschnitte 2, von denen drei Abschnitte vorgesehen sind, sind auf in Längsrichtung der Hülse verlaufende nach innen vorspringende Teilflächen 9 in
Form von Streifen beschränkt und durch Prägen bzw.
Schlagwirkung gebildet, wie dies auch anhand der außen
verlaufende Eindrückungen 9' erkennbar ist, die den
Gewindeabschnitten gegenüberliegen. Zur Erzeugung der
Gewindeabschnitte 2 wird die Hülse 1 auf einen Gewindedorn aufgesteckt, der dem Außengewinde 3 des Rohrendes
4 entspricht. Durch Schlagen oder Drücken werden dann
die Eindrückungen 9' erzeugt, wobei das nach innen verdrängte Material der Hülse 1 in das Gewinde des als
Werkzeug ausgebildeten Gewindedornes eindringt. Hierbei
werden die Gewindeabschnitte 2 am Gewindedorn abgeformt.

0128575

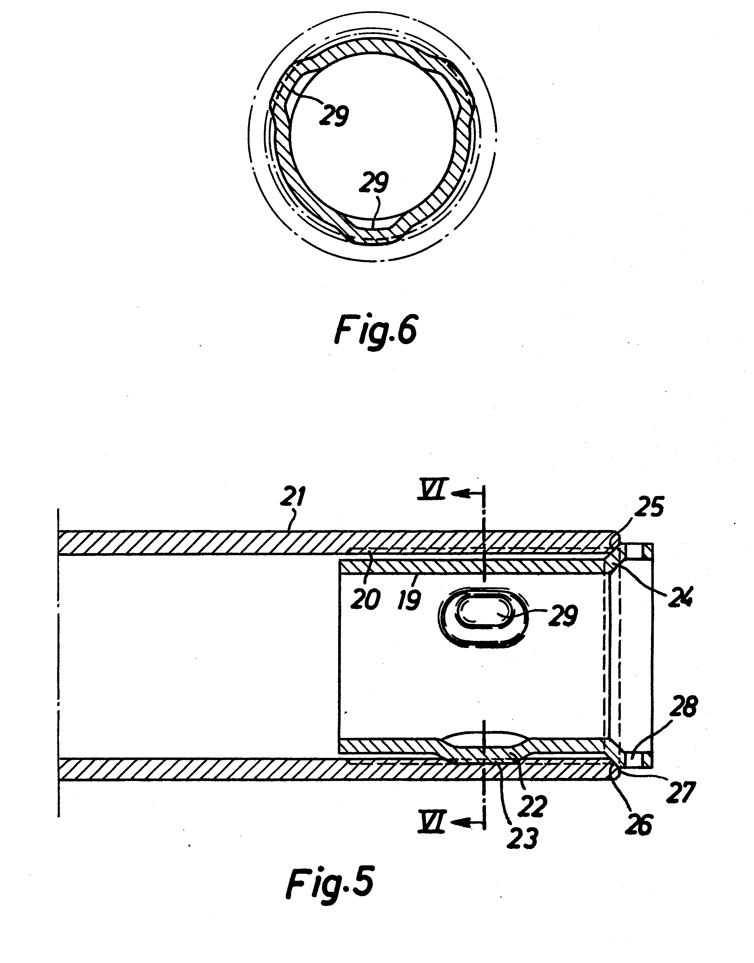

Bei der in den Fig. 3 und 4 dargestellten Ausführungsform ist die Schutzvorrichtung als Kappe 10 ausgebildet,
die einen geschlossenen Boden 11 aufweist, in welchem
eine Öffnung 12 für den Einsatz eines Aufschraubwerkzeuges vorgesehen ist. Der Boden 11 der Kappe 10 ist
in der Nähe seines Außenbereiches nach innen eingezogen, so daß ein wulstartiger Außenrand 13 verbleibt,
mit dem die Kappe um die Stirnfläche 5 des Rohrendes
herumgreift. Dieser Randwulst 13 ist so ausgebildet,
daß er mit einer radial innen gelegenen Schulter 14
sich im aufgeschraubten Zustand der Kappe an einer
Innenphase 15 des Rohrendes 4 abstützt.

Bei dieser Ausführungsform sind ebenfalls nur Gewindeabschnitte und kein vollständiges Gewinde vorgesehen,
wobei diese Gewindeabschnitte mit 16 bezeichnet sind
und nur einen Teil der streifenartigen Gewindeabschnitte
2 bei der Ausführungsform nach Fig. 1 und 2 bilden.
Es handelt sich hier also auch um Gewindeabschnitte die
nur verhältnismäßig geringe Teilflächen der Schutzvorrichtung ausmachen. Bei dieser Ausgestaltung sind
die Gewindeabschnitte 16 ebenfalls durch Prägen oder
Schlagen ausgebildet und auf nach innen hervorstehenden
Teilflächen 17 der Kappe gebildet, wobei diese nach innen
vorstehenden Teilflächen ebenso wie bei der Ausführungsform nach Fig. 1 durch von außen nach innen gerichtete
Eindrückungen 18 gebildet sind. Bei solchen verhältnismäßig kleinen Gewindeabschnitten 16 werden die zur Erzeugung der Gewindeabschnitte notwendigen nach innen
vorstehenden Teilflächen 17 durch Schlagen erzeugt,
wenn die Kappe auf ein als Gewindedorn ausgebildetes
Werkzeug aufgesteckt ist. Bei diesem Schlagvorgang entstehen die Eindrückungen 18 und aufgrund der Materialverdrängung die nach innen gerichteten vorspringenden

0128575

Teilflächen 17 auf denen sich die Gewindeabschnitte 16
am Gewindedorn abformen.

Bei der Ausführungsform nach den Fig. 5 und 6 handelt
es sich um eine Schutzvorrichtung in Form einer Hülse
19, die zum Schutze eines Innengewindes 20 eines Rohrendes 21 dient. Diese Hülse 19 weist nach außen gerichtete Vorsprünge 22 auf, auf denen Gewindeabschnitte
23 ausgebildet sind. Es handelt sich hier ebenfalls um
Teilflächen entsprechend der Ausbildung gemäß den
Fig. 3 und 4, wobei jedoch die Gewindeabschnitte auf
der Außenseite der Hülse und nicht auf dern Innenseite
ausgebildet sind, um in das Innengewinde 20 einschraubbar zu sein. Die Hülse weist an ihrem einen Ende eine
wulstartige Auswölbung 24 mit einer Schulter 25 auf,
die sich an einer Innenphase 26 am Rohrende 27 abstützt,
um eine zusätzliche Abstützung und Zentrierung zu bilden,
wodurch die Gewindeabschnitte bei Stößen entlastet
werden können. Außerdem schützt der Wulst 24 das stirnseite Ende 27 des Rohres. Mit 28 sind Bohrungen zum Einsatz eines Werkzeuges bezeichnet, mit dem die Hülse 19
in das Rohr einschraubbar ist. Die Teilflächen 22 die
als nach außen gerichtete Vorsprünge ausgebildet sind,
sind durch eine von innen nach außen gerichtete Schlagwirkung erzeugt, wobei die Hülse in ein als Mutter ausgebildetes Werkzeug eingesetzt ist, so daß sich beim
Herausdrücken der Vorsprünge 22 die Gewindeabschnitte
23 in dem Gewinde des mutterartigen Werkzeuges abformen.
Bei diesem Vorgang bilden sich Eindrückungen 29, die
den Ausprägungen 22 gegenüberliegen.

Patentansprüche

1. Schutzvorrichtung für das Ende eines mit Innen- oder
   Außengewinde versehenen Rohres,
   insbesondere für  Ölfeld-Rohre, nach Art eines aus
   Metall bestehenden Hohlkörpers mit Außengewinde oder
   Innengewinde, der mit dem zu schützenden Gewinde verschraubbar ist, dadurch  g e k e n n z e i c h -
   n e t ,  daß das Gewinde der Schutzvorrichtung (1, 10,
   19) in Form von Gewindeabschnitten (2, 16, 23) auf
   Teilflächen (9, 17, 22) des Hohlkörpers ausgebildet
   sind, wobei die Teilflächen gegenüber der Mantelfläche
   hervorstehen und der Durchmesser des gewindefreien
   Mantels des Hohlkörpers mit geringem Spiel über den
   zu schützenden Gewindeabschnitt schiebbar ist.

2. Schutzvorrichtung nach Anspruch 1, dadurch  g e -
   k e n n z e i c h n e t ,   daß die hervorstehenden
   Teilflächen (9, 17, 22) durch prägende  Verformung
   des Hohlkörpers (1, 10, 19) in den Teilflächenbereichen
   erzeugt sind.

3. Schutzvorrichtung nach Anspruch 1 oder 2, dadurch g e -
   k e n n z e i c h n e t ,   daß die Gewindeabschnitte
   (2, 16, 23) durch prägende Verformung erzeugt sind.

4. Schutzvorrichtung nach einem der Ansprüche 1 bis 3,
   dadurch gekennzeichnet, daß die
   Teilflächen (17, 22) punktförmig ausgebildet sind.

5. Schutzvorrichtung nach einem der Ansprüche 1 bis 3,
   dadurch gekennzeichnet, daß die
   Teilflächen (9) in Form von in Richtung der Längsachse des Hohlkörpers verlaufenden Streifen ausgebildet sind.

6. Schutzvorrichtung nach einem der Ansprüche 1 bis 5,
   dadurch gekennzeichnet, daß der
   Hohlkörper eine Schulter (14, 25) aufweist, mit der
   er sich im aufgeschraubten Zustand am Rohrende (5, 24)
   des zu schützenden Rohres abstützt.

7. Schutzvorrichtung nach Anspruch 6, dadurch gekennzeichnet, daß die Schulter (14, 25)
   Anlagenflächen zur Anlage an einer Innenphase (15, 24)
   und gegebenenfalls auch noch an der Stirnfläche (5,
   26) des Rohres aufweist.

8. Schutzvorrichtung nach einem der Ansprüche 1 bis 7,
   dadurch gekennzeichnet, daß der
   Hohlkörper als Kappe (10) ausgebildet ist.

9. Verfahren zur Herstellung einer Schutzvorrichtung für
   das Ende eines mit Innen- oder Außengewinde versehenen
   Rohres großen Durchmessers, insbesondere für Pipeline-
   Rohre, dadurch gekennzeichnet, daß
   ein Hohlkörper durch Druck- oder Schlagkraft gegen
   ein dem zu schützenden Gewindeabschnitt entsprechendes
   Werkzeug im Bereich einiger Teilflächen gedrückt und
   dabei unter Abformung des Gewindes des Werkzeuges an

- 3 -

0128575

diesen Teilflächen bleibend verformt wird.

0128575

Fig.2

Fig.4

Fig.1

Fig.3

0128575

**Fig.6**

**Fig.5**